# EUROPÄISCHE PATENTSCHRIFT

(11) **EP 2 146 859 B1**
(45) Veröffentlichungstag und Bekanntmachung des Hinweises auf die Patenterteilung: **24.10.2012**
(21) Anmeldenummer: 08748905.0
(22) Anmeldetag: 14.04.2008
(51) Int. Cl.: B60K 15/07, B60K 15/03, F17C 1/00

(54) **Kraftfahrzeug mit wenigstens einem Gaskraftstofftank**
Motor vehicle with at least a gaseous fuel tank
Véhicule automobile avec au moins un réservoir à gaz

(30) Priorität: 13.04.2007 DE 102007017425
(43) Veröffentlichungstag der Anmeldung: 27.01.2010
(73) Patentinhaber: GM Global Technology Operations LLC, Detroit, MI 48265-3000 (US)
(72) Erfinder: JAUSS, Andreas, 56479 Westernohe (DE)
(74) Vertreter: Strauss, Peter
(86) Internationale Anmeldenummer: PCT/EP2008/002933
(87) Internationale Veröffentlichungsnummer: WO 2008/125317

(56) Entgegenhaltungen:
- WO-A-93/03304
- WO-A-2006/129878
- WO-A1-2005/080114
- DE-A1- 10 306 681
- DE-A1-102006 031 118

## Beschreibung

### Gebiet der Erfindung

Die vorliegende Erfindung liegt auf dem technischen Gebiet der Fahrzeugtechnik und betrifft ein Kraftfahrzeug, das mit wenigstens einem Gaskraftstofftank ausgerüstet ist.

### Stand der Technik

Moderne Kraftfahrzeuge werden zunehmend für den Betrieb mit Gaskraftstoff ausgerüstet. Als Gaskraftstoffe werden hauptsächlich in flüssiger Form im Gastank gespeicherte Flüssiggase auf Petroleumbasis, wie Autogas (LPG = Liquified Petroleum Gas), und in gasförmiger Form im Gastank gespeicherte Gaskraftstoffe, wie Erdgas (CNG = Compressed Natural Gas), verwendet. Autogas besteht im Wesentlichen aus Propan und Butan und tritt als Nebenprodukt aus Hydrierprozessen bei der Erdölraffinierung auf. Erdgas besteht hauptsächlich aus Methan und wird durch Förderung aus Erdgasquellen gewonnen.

Mit Gaskraftstoff betreibbare Kraftfahrzeuge sind mit einem Gaskraftstofftank versehen, der aus einem oder mehreren untereinander fluidleitend verbundenen Druckbehältern besteht. Im Gaskraftstofftank wird der Gaskraftstoff in verdichteter Form gespeichert. Beispielsweise wird CNG mit einem Druck von 200-300 bar im Gaskraftstofftank gespeichert.

Für den Gaskraftstofftank werden bislang Flaschen aus Stahl eingesetzt, ähnlich wie sie ansonsten auch für Industrie-Gasflaschen verwendet werden. Die Gasflaschen werden zum Beispiel auf der Unterseite der Bodengruppe meist im hinteren Bereich des Fahrzeugs, quer zur Fahrtrichtung, zwischen den so genannten Rahmenlängsträgern positioniert. Eine Befestigung der Gasflaschen am Fahrzeug erfolgt beispielsweise mittels Spannbänder, die um die Gasflaschen gespannt und an Querträgern zwischen den Rahmenlängsträgern befestigt werden. Üblich ist auch die Positionierung der Gasflaschen in einer Vertiefung des Kofferraums, die ansonsten als Reserveradmulde dient.

Die eingesetzten Gasflaschen haben einen zylindrischen Flaschenrumpf, der sich an einem Endabschnitt zu einem Flaschenhals verjüngt. Der Flaschenhals ist mit einer Öffnung versehen, in die ein beispielsweise elektromagnetisch betätigbares Gasventil eingebracht werden kann, um die Gasflasche zu befüllen und Gas zu entnehmen. Einfache Gasventile zur Steuerung des Gasstroms sind beispielsweise einer herkömmlichen T-Form nachgebildet, wie sie auch von Taucherflaschen her bekannt ist. Solche Gasventile werden gewöhnlich über einen mit einem Außengewinde versehenen Ventilkörper, welcher mit Steuereinrichtungen zur Steuerung des Gasstroms, sowie mit Anschlussstutzen zum Anschluss von Kraftstoffleitungen und gegebenenfalls mit Sicherheitseinrichtungen versehen ist, in die mit einem Innengewinde versehene Öffnung im Flaschenhals der Gasflasche eingeschraubt.

Als nachteilig hat sich die äußere Form der Gasflaschen erwiesen, die aufgrund des vom Flaschenrumpf vorspringenden Flaschenhalses eine nur schlechte Nutzung des zur Verfügung stehenden Bauraums beispielsweise zwischen den Rahmenlängsträgern erlauben, so dass im Verhältnis zu dem zur Verfügung stehenden Bauraum nur vergleichsweise wenig Gaskraftstoff mit dem Fahrzeug transportiert werden kann.

DE 10 2006 031118 A1 offenbart einen Gaskraftstofftank für ein Kraftfahrzeug mit einem einen Hohlraum zur Aufnahme von Gaskraftstoff formenden Rumpfabschnitt, einem am Rumpfabschnitt angeformten Halsabschnitt mit einer Öffnung zur Aufnahme eines Gasventils zum Be- und Entladen des Hohlraums mit Gaskraftstoff, wobei der Halsabschnitt in den vom Rumpfabschnitt geformten Hohlraum eingezogen ist und wobei das Gasventil ein Innenventil mit einem wenigstens teilweise innerhalb der Öffnung des Halsabschnitts aufgenommenen Ventilkörper ist.

Die Offenlegungsschrift DE 10 2006031118 A1 zeigt einen Wasserstoffdrucktank mit einer äußeren Stützlage und einer inneren, gasdichten Auskleidung, wobei ein Vorsprung in einer Öffnung der Stützlage positioniert. Die innere Auskleidung ist mit einem Halsabschnitt versehen, der sich durch eine Innenbohrung des Vorsprungs erstreckt und einen Flansch an einer Außenfläche des Vorsprungs aufweist. Der Vorsprung ist an der inneren Auskleidung befestigt.

WO 2005/080114 A1 offenbart einen Gaskraftstofftank für ein Kraftfahrzeug mit einem einen Hohlraum zur Aufnahme von Gaskraftstoff formenden Rumpfabschnitt, wobei ein Gasventil und ein Veschlusselement als Halterung zur Befestigung des Gaskraftstofftanks am Fahrzeug dienen.

### Aufgabenstellung

Demgegenüber besteht die Aufgabe der vorliegenden Erfindung darin, einen Gaskraftstofftank anzugeben, mit dem der für den Gaskraftstofftank zur Verfügung stehende Bauraum besser als bei den herkömmlichen Gasflaschen genutzt werden kann, so dass mehr Gaskraftstoff mit dem Fahrzeug mitgeführt werden kann.

Diese Aufgabe wird nach dem Vorschlag der Erfindung durch ein Fahrazeug mit den Merkmalen des unabhängigen Anspruchs gelöst. Vorteilhafte Ausgestaltungen der Erfindung sind durch die Merkmale der Unteransprüche angegeben.

Der Gaskraftstofftank ist voreugesweise als Druckspeicher ausgebildet und geeignet verdichteten Gaskraftstoff, wie LPG oder CNG, unter hohem Druck, beispielsweise 200-300 bar zu speichern, zu welchem Zweck er aus einem druckfesten Material, beispielsweise Stahl, geformt sein kann. Aufgrund einer kostengünstigen Herstellung ist der Gaskraftstofftank vorteilhaft aus einem homogen isotropen Werkstoff, insbesondere einem metallischen Werkstoff, beispielsweise Stahl, herstellt.

Erfindungsgemäß umfasst der Gaskraftstofftank einen Rumpfabschnitt, der einen Hohlraum (Innenraum) zur Aufnahme von Gaskraftstoff umgibt, sowie einen am Rumpfabschnitt angeformten Halsabschnitt. Der Halsabschnitt formt eine in den Hohlraum mündende Öffnung, welche der Aufnahme eines Gasventils zum Be- und Entladen des Hohlraums mit Gaskraftstoff dient.

Erfindungsgemäß umfasst der Gaskraftstofftank einen Halsabschnitt, der in den vom Rumpfabschnitt geformten Hohlraum (vollständig) eingezogenist.

Durch den in den Hohlraum des Rumpfabschnitts vorspringenden Halsabschnitt wird in vorteilhafter Weise die äußere Form des Gaskraftstofftanks im Vergleich zu den herkömmlichen Gasflaschen kompakter, so dass der Rumpfabschnitt größer gestaltet, der Bauraum besser ausfüllt, und vergleichsweise mehr Gaskraftstoff in dem zur Verfügung stehenden Bauraum mit dem Fahrzeug transportiert werden kann.

Erfindungsgemäβ zeichnet sich der Gaskraftstofftank. durch einen langgestreckten Rumpfabschnitt mit abgeflachten Endabschnitten aus, wobei der Halsabschnitt an einem der beiden Endabschnitte angeordnet ist. Der Rumpfabschnitt des Gaskraftstofftanks ist beispielsweise zylindrisch geformt.

An dem dem Gasventil gegenüberliegenden abgeflachten Endabschnitt des Rumpfabschnitts ist ein in den Hohlraum eingezogener Halsabschnitt angeformt . Der Halsabschnitt formt hierbei eine Öffnung, die zur Aufnahme eines Verschlusselements zum Verschließen der Öffnung dient. Das Gasventil und das veschlusselement dienen als Halterung zur Befestigung des Gaskraftstofftanks am Fahrzeug. So können die aus dem Hohlraum des Gaskraftstofftanks ragenden Abschnitte von Gasventil und Verschlusselement beispielsweise als Mehrkant ausgeführt sein, die eine besondere einfache Befestigung des Gaskraftstofftanks am Fahrzeug durch Formschluss mit am Fahrzeug angebrachten Halterungen ermöglichen. Auf diese

Weise kann in besonders vorteilhafter Weise unter Beibehaltung der Kompaktheit des Gaskraftstofftanks eine einfache Befestigung des Gaskraftstofftanks am Fahrzeug realisiert werden, die im Vergleich zu herkömmlichen Befestigungen von Gaskraftstofftanks Bauteile einspart, so dass Material- und Fertigungskosten eingespart werden können. Lediglich der Vollständigkeit halber sei darauf hingewiesen, dass das Verschlusselement auch mit Sicherheitseinrichtungen, wie thermischen Sicherungen, versehen sein kann. Die Öffnung für das Verschlusselement kann in Form und Größe von der Öffnung für das Gasventil verschieden sein.

Erfindungsgemäβ ist das Gasventil in Form eines Innenventils mit einem wenigstens teilweise innerhalb der Öffnung des Halsabschnitts aufgenommenen Ventilkörper ausgebildet. Der Ventilkörper ist, wie üblich, mit Steuerelementen zur Steuerung der Ventilfunktion des Gasventils, sowie wenigstens einem Anschlussstutzen zum Anschluss einer Gasleitung versehen. Typischer Weise sind zwei Anschlussstutzen vorgesehen, nämlich ein Anschlussstutzen mit Rückschlagventil, welcher zur Befüllung des Gastanks mit Gaskraftstoff dient, und ein weiterer Anschlussstutzen ohne Rückschlagventil, welcher während des Betriebs des Fahrzeugs zur Abgabe von Gaskraftstoff an die Brennkraftmaschine dient.

Gewöhnlich ist der Ventilkörper mit weiteren den Gaskraftstofffluss steuernden Elementen versehen, wie einem manuellen Absperrventil, durch welches der Gaskraftstofffluss über das Gasventil unabhängig von dessen Steuerungszustand manuell unterbrochen werden kann. Des Weiteren können im Ventilkörper Sicherungselemente vorgesehen sein, welche die Betriebssicherheit des Ventils gewährleisten. Bei solchen Sicherungselementen handelt es sich beispielsweise um eine Überdrucksicherung, etwa in Form einer Berstscheibe, durch welche bei einer Überhitzung des Gastanks, etwa bei einem Fahrzeugbrand, kontrolliert Gaskraftstoff aus dem Gastank abgelassen werden kann. Eingesetzt wird auch eine thermische Sicherung, welche beispielsweise in Form eines fluidgefüllten Glaskörpers ausgebildet ist, der bei übermäßiger Erwärmung der Außenhaut des Gastanks platzt und auf diese Weise eine Durchbrechung der Wand des Gastanks schafft, durch welche Gaskraftstoff entweichen kann, um so eine Explosion des Gastanks zu vermeiden.

Weiterhin kann einer Crash-Schutzplatte vorgesehen sein, die auf der dem Gaskraftstofftank abgewandten Seite des Ventils angeordnet ist, das Ventil abdeckt und vor mechanischer Krafteinwirkung schützt. Ein wesentlicher Vorteil von Innenventilen ist insbesondere darin zu sehen, dass durch die einfache Kontur der außerhalb des Gastanks befindlichen Ventilabschnitte der Ventilschutz einfacher und kostengünstiger ausgeführt werden kann.

Des Weiteren erstreckt sich die Erfindung auf ein Kraftfahrzeug, das mit wenigstens einem wie oben beschriebenen Gaskraftstofftank ausgerüstet ist.

### Ausführungsbeispiel

Die Erfindung wird nun anhand eines Ausführungsbeispiels näher erläutert, wobei Bezug auf die beigefügte Zeichnung genommen wird. Es zeigt:

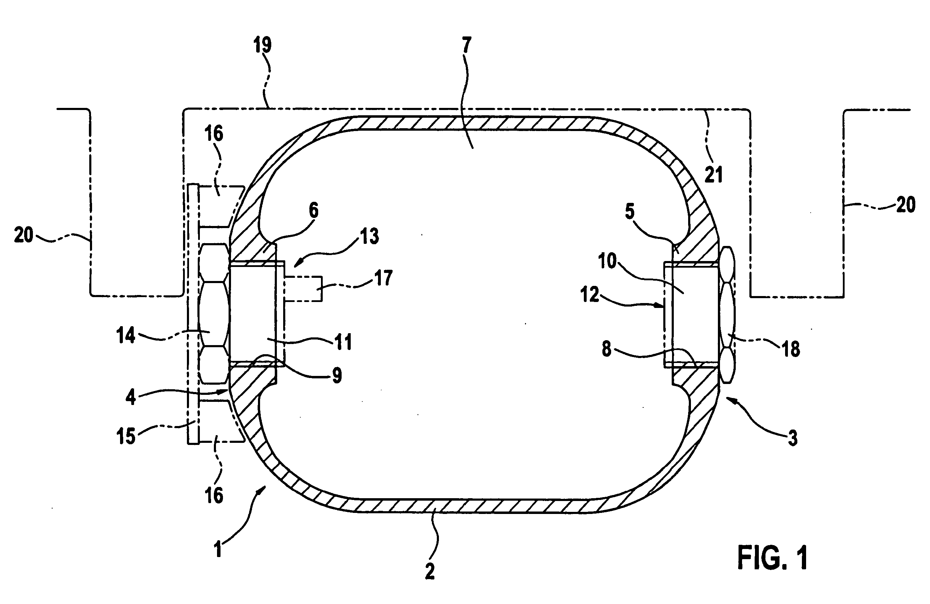

- Fig. 1: eine schematische Schnittdarstellung eines Ausführungsbeispiels des Gaskraftstofftanks des erfindungsgemäβen Kraftfahrzeugs.

Demnach umfasst ein ingesamt mit der Bezugszahl 1 bezeichneter Gaskraftstofftank einen zylindrischen Rumpfabschnitt 2, der einen Hohlraum 7 zur Aufnahme von Gaskraftstoff formt. Die stirnseitigen Endabschnitte 3, 4 des Gaskraftstofftanks 1 sind abgeflacht (abgeplattet). In den beiden Endabschnitten 3, 4 des Gaskraftstofftanks 1 ist jeweils ein Halsabschnitt 5, 6 an den Rumpfabschnitt 2 angeformt. Die beiden Halsabschnitte 5, 6 erstrecken sich jeweils in den Hohlraum 7 des Rumpfabschnitts 2 hinein.

Die beiden Halsabschnitte 5, 6 formen jeweils eine in den Hohlraum 7 mündende Öffnung 8, 9. Die in Fig. 1 auf der linken Seite befindliche Öffnung 9 ist mit einem in Fig. 1 nicht näher dargestellten Innengewinde versehen, in das der mit einem nicht näher dargestellten Außengewinde versehene Ventilkörper 11 eines Gasventils 13 eingeschraubt ist. Die in Fig. 1 auf der rechten Seite befindliche Öffnung 8 ist mit einem nicht näher dargestellten Innengewinde versehen, in das ein mit einem nicht näher dargestellten Außengewinde versehenes Verschlusselement 12 eingeschraubt ist.

Beide in den Hohlraum 7 ragenden Halsabschnitte 5, 6 sind so an den Rumpfabschnitt 2 angeformt, dass deren Abmessung in Richtung der Längsachse des zylinderförmigen Rumpfabschnitts 2 eine sichere Aufnahme des Gasventils 13 bzw. des Verschlusselements 12 ermöglicht. Dies bedeutet, dass für die jeweiligen Schraubverbindungen eine ausreichende Windungszahl ermöglicht ist, so dass das Gasventil 13 bzw. das Verschlusselement 12 dem angreifenden hohen Gasdruck standhalten können. Entsprechend ist die Wanddicke des Gaskrafstofftanks im Bereich der Halsabschnitte 5, 6 gegenüber der Wanddicke im Bereich des zylindrischen Rumpfabschnitts 2 vergrößert. Die beiden Halsabschnitte 5, 6 verdicken somit die Wandung des Gaskraftstofftanks 1 im Bereich der beiden Öffnungen 8, 9.

Im vorliegenden Ausführungsbeispiel sind die Öffnungen 8, 9 im Schnitt rund, jede andere Form ist jedoch möglich. Ebenso ist möglich, dass das Gasventil 13 bzw. das Verschlusselement 12 durch eine andere Verbindung als eine Schraubverbindung in den Öffnungen 8, 9 der jeweiligen Halsabschnitte 5, 6 befestigt sind.

Das in Form eines Innenventils ausgebildete Gasventil 13 dient zur Steuerung des Gaskraftstoffströme in den Hohlraum 7 des Gaskraftstofftanks 1 hinein und aus dem Hohlraum 7 des Gaskraftstofftanks 1 heraus. Der Ventilkörper 11 ist zu diesem Zweck mit hier nicht näher dargestellten Steuereinrichtungen zur Steuerung der Gasströme, sowie sonstigen Elementen, wie einem manuellen Absperrventil und diversen Sicherheitseinrichtungen, versehen. Der Ventilkörper 11 ist größtenteils innerhalb der durch den Halsabschnitt 6 geformten Öffnung 9 aufgenommen. Ein Ventilrohr 17 zur Leitung von Gaskraftstoff ragt in den Hohlraum 7 hinein.

Wie in Fig. 1 dargestellt ist, ragt ein gewöhnlich als Ventilkörperkopf bezeichneter Endabschnitt des Ventilkörpers 11 aus der Öffnung 9 des Halsabschnitts 6, an welchem ein Mehrkant 14, hier ein Sechskant, angeformt ist. In Fig. 1 nicht dargestellt sind radial am Ventilkörperkopf angeordnete Anschlussstutzen zum Anschluss von Gasleitungen, durch welche der Gaskraftstofftank 1 betankt und Gaskraftstoff während des Betriebs des Kraftfahrzeugs zur Brennkraftmaschine zum Antrieb des Kraftfahrzeugs geleitet werden kann.

Das Gasventil 13 wird vor mechanischer Einwirkung im Crash-Fall von einer Sicherheitseinrichtung geschützt, die aus einer Crash-Schutzplatte 15 und die Crash-Schutzplatte 15 gegen den Rumpabschnitt 2 abstützende Stützstreben 16 besteht. Die Crash-Schutzplatte 15 überdeckt die aus der Öffnung 9 des Halsabschnitts 6 ragenden Strukturen des Gasventils 13. Durch die Stützstreben 16 werden auf die Crash-Schutzplatte einwirkende mechanische Kräfte auf die Außenhaut des Gaskraftstofftanks 1 abgeleitet. Die Crash-Schutzplatte 15 ist beispielsweise aus einem gleichen Material wie der Gaskraftstofftank 1 gefertigt, beispielsweise Stahl. Somit ist die Crash-Schutzplatte 15 härter als der Ventilkörper 11 des Gasventils 13 der beispielsweise aus Messing gefertigt ist.

Das an dem dem Gasventil 13 gegenüberliegenden Endabschnitt 3 des Gaskraftstofftanks 1 angeordnete Verschlusselement 12 verschließt die Öffnung 8 gasdicht. Das Verschlusselement 12 ist durch einen mit einem Außengewinde versehenen Verschlusselementkörper 10, der ein Dummy-Ventilkörper ohne Ventilfunktion sein kann, in die mit einem Innengewinde versehene Öffnung 8 eingeschraubt. An den Verschlusselementkörper 10 ist ein Mehrkant 18, hier ein Sechskant, angeformt, der aus der Öffnung 8 ragt.

Der Gaskraftstofftank 1 ist im Kraftfahrzeug innerhalb einer Ausnehmung 21 des Bodenblechs 19 (Strukturbauteil der Bodengruppe), quer zur Fahrzeuglängsrichtung, zwischen den beiden Rahmenlängsträgern 20 platziert.

Eine Montage des Gaskraftstofftanks 1 am Fahrzeug erfolgt durch hier nicht dargestellte, an den Rahmenlängsträgern 20 befestigte Halterungen, die an dem Mehrkant 18 des Veschlusselements 12 bzw. an dem Mehrkant 14 des Gasventils 13 angreifen. Eine solche Halterung kann fahrzeugseitig beispielsweise mittels einer Schrauben-, Niet- oder Schweißverbindung am Rahmenlängsträger 20 befestigt sein. Eine Befestigung der Halterungen am Gaskraftstofftank 1 kann in besonders einfacher Weise durch eine formschlüssige Verbindung mit dem Mehrkant 14 des Gasventils 13 bzw. dem Mehrkant 18 des Verschlusselements 12 erfolgen.

Der Gaskraftstofftank 1 ist vorteilhaft aus einem homogen isotropen Werkstoff, beispielsweise Metall, insbesondere Stahl, gefertigt. Durch die Anbringung zwischen den beiden Rahmenlängsträgern 1 kann der Gaskraftstofftank 1 als Verstärkungselement für die Karosseriestruktur dienen.

Die kompakte Form des Gaskraftstofftanks 1 mit abgeflachten Endabschnitten 3, 4 und zusätzlich einem als Innenventil ausgeführten Gasventil 13 erlaubt es im Vergleich zu den herkömmlichen mit einem vorspringendem Hals versehenen Gasflaschen den zur Verfügung stehenden Bauraum besser zu nutzen und einen größeren Hohlraum 7 zur Befüllung mit Gaskraftstoff bereit zu stellen. Anders ausgedrückt, kann ein vergleichsweise größerer Rumpfabschnitt 2 innerhalb der Ausnehmung 21 zwischen den beiden Rahmenlängsträgern 20 untergebracht werden.

### Bezugszeichenliste

- 1: Gaskraftstoffbehälter
- 2: Rumpfabschnitt
- 3: Endabschnitt
- 4: Endabschnitt
- 5: Halsabschnitt
- 6: Halsabschnitt
- 7: Hohlraum
- 8: Öffnung
- 9: Öffnung
- 10: Verschlusselementkörper
- 11: Ventilkörper
- 12: Verschlusselement
- 13: Gasventil
- 14: Mehrkant
- 15: Crash-Schutzplatte
- 16: Stützstrebe
- 17: Rohrleitung
- 18: Mehrkant
- 19: Bodenblech
- 20: Rahmenlängsträger
- 21: Ausnehmung

## Patentansprüche

1. Kraftfahrzeug mit wenigstens einem Gaskraftstofftank (1) mit einem einen Hohlraum (7) zur Aufnahme von Gaskraftstoff formenden langgestreckten Rumpfabschnitt (2) mit zwei gegenüberliegenden, abgeflachten Endabschnitten (3, 4), wobei an jedem Endabschnitt (3, 4) am Rumpfabschnitt (2) jeweils ein Halsabschnitt (5,6) mit einer in den Hohlraum (7) mündenden Öffnung (8.9) angeformt ist, wobei je der Halsabschnitt (5,6) in den vom Rumpfabschnitt (2) geformten Hohlraum (7) eingezogen ist, wobei ein Gasventil (13) zum Be- und Entladen des Hohlraums (7) mit Gaskraftstoff in der Öffnung (9) des Halsabschnitts (6) des einen Endabschnitts (4) und ein Verschlusselement (12) zum Verschließen der Öffnung in der Öffnung (8) des Halsabschnitts (5) des anderen Endabschnitts (3) befestigt ist, wobei das Gasventil (13) ein Innenventil mit einem wenigstens teilweise innerhalb der Öffnung (9) des Halsabschnitts (6) aufgenommenen Ventilkörper (11) ist, und wobei das Gasventil (13) und das Verschlusselement (12) zur Halterung des Gaskraftstofftanks (1) am Kraftfahrzeug dienen.

2. Kraftfahrzeug nach Anspruch 1, bei welchem der Gaskraftstofftank (1) einen zylindrischen Rumpfabschnitt (2) aufweist.

3. Kraftfahrzeug nach einem der Ansprüche 1 oder 2, bei welchem ein aus einer Öffnung (9) des Halsabschnitts (6) ragender Endabschnitt des Gasventils (13) in Form eines Mehrkants (14) ausgebildet ist.

4. Kraftfahrzeug nach einem der Ansprüche 1 bis 3, bei welchem ein aus einer Öffnung (9) des Halsabschnitts (6) ragender Endabschnitt des Verschlusselements (12) in Form eines Mehrkants (18) ausgebildet ist.

5. Kraftfahrzeug nach einem der Ansprüche 1 bis 4, bei welchem eine Dicke der Wandung des Gaskraftstofftanks (1) im Bereich des Halsabschnitts (6) gegenüber einer Dicke der Wandung im Bereich des Rumpfabschnitts (2) vergrößert ist.

6. Kraftfahrzeug nach einem der Ansprüche 1 bis 5, bei welchem eine das Gasventil (13) abdeckende und vor mechanischer Krafteinwirkung schützende Crash-Schutzplatte (15) auf der dem Gaskraftstofftank abgewandten Seite des Gasventils (13) angeordnet ist.

## Claims

1. A motor vehicle, comprising at least one gas fuel tank (1) with an elongated body section (2) forming a hollow space (7) for accommodating gas fuel and comprising two opposite, flattened end sections (3, 4), with one respective throat section (5, 6) with an opening (8, 9) that opens into the hollow space (7) being formed on each end section (3, 4) on the body section (2), with the throat section (5, 6) being drawn into the hollow space (7) formed in the body section (2), with a gas valve (13) for loading and discharging the hollow space (7) with gas fuel being fixed in the opening (9) of the throat section (6) of the one end section (4) and a closing element (12) for closing the opening being fixed in the opening (8) of the throat section (5) of the other end section (3), with the gas valve (13) being an inner valve with a valve body (11) accommodated at least in part within the opening (9) of the throat section (6), and with the gas valve (13) and the closing element (12) being used for holding the gas fuel tank (1) on the motor vehicle.

2. A motor vehicle according to claim 1, wherein the gas fuel tank (1) has a cylindrical body section (2).

3. A motor vehicle according to one of the claims 1 or 2, wherein an end section of the gas valve (13) which protrudes from an opening (9) of the throat section (6) is arranged in form of a polyhedron (14).

4. A motor vehicle according to one of the claims 1 to 3, wherein an end section of the closing element (12) which protrudes from an opening (9) of the throat section (6) is arranged in form of a polyhedron (18).

5. A motor vehicle according to one of the claims 1 to 4, wherein a thickness of the wall of the gas fuel tank (1) is enlarged in the region of the throat section (6) as compared to a thickness of the wall in the region of the body section (2).

6. A motor vehicle according to one of the claims 1 to 5, wherein a crash protection plate (15) which covers the gas valve (13) and protects the same from mechanical action of force is arranged on the side of the gas valve (13) facing away from the gas fuel tank.

## Revendications

1. Véhicule à moteur avec au moins un réservoir de carburant gazeux (1) avec une partie de corps (2) allongée formant un espace creux (7) pour recevoir du carburant gazeux avec deux parties d'extrémité (3, 4) aplaties se faisant face, dans lequel une partie de goulot (7, 6) avec une ouverture (8, 9) débouchant dans l'espace creux (7) est formée sur chaque partie d'extrémité (3, 4) de la partie de corps (2), dans lequel chaque partie de goulot (5, 6) est rétractée dans l'espace creux (7) formé par la partie de corps (2), dans lequel une soupape à gaz (13) pour le remplissage et le vidage de l'espace creux (7) avec du carburant gazeux est fixée dans l'ouverture (9) de la partie de goulot (6) d'une partie d'extrémité (4) et un élément de fermeture (12) pour fermer l'ouverture est fixé dans l'ouverture (8) de la partie de goulot (5) de l'autre partie d'extrémité (3), dans lequel la soupape à gaz (13) est une soupape intérieure avec un corps de soupape (11) au moins partiellement logé à l'intérieur de l'ouverture (9) de la partie de goulot (6), et dans lequel la soupape à gaz (13) et l'élément de fermeture (12) servent à retenir le réservoir de carburant gazeux (1) sur le véhicule à moteur.

2. Véhicule à moteur selon la revendication 1, dans lequel le réservoir de carburant gazeux (1) présente une partie de corps (2) cylindrique.

3. Véhicule à moteur selon l'une des revendications 1 ou 2, dans lequel une partie d'extrémité de la soupape à gaz (13) dépassant d'une ouverture (9) de la partie de goulot (6) a la forme d'un polygone (14).

4. Véhicule à moteur selon l'une des revendications 1 à 3, dans lequel une partie d'extrémité de l'élément de fermeture (12) dépassant d'une ouverture (9) de la partie de goulot (6) a la forme d'un polygone (18).

5. Véhicule à moteur selon l'une des revendications 1 à 4, dans laquelle une épaisseur de la paroi du réservoir de carburant gazeux (1) est augmentée au niveau de la partie de goulot (6) par rapport à une épaisseur de la paroi au niveau de la partie de corps (2).

6. Véhicule à moteur selon l'une des revendications 1 à 5, dans lequel une plaque anticollision (15) recouvrant la soupape à gaz (13) et la protégeant contre l'action de forces mécaniques est disposée sur le côté de la soupape à gaz (13) orienté à l'opposé du réservoir de carburant gazeux.
